# NOUVEAU FASCICULE DE BREVET EUROPEEN

(11) **EP 0 312 126 B2**
(45) Date de publication et mention de la décision concernant l'opposition: **15.05.2002**
(45) Mention de la délivrance du brevet: 10.02.1993
(21) Numéro de dépôt: 88119957.4
(22) Date de dépôt: 12.11.1984
(51) Int. Cl.: A01G 3/04

(54) **Machine de coupe utilisable en agriculture, viticulture et arboriculture**
Schneidapparat zur Verwendung in der Landwirtschaft, dem Weinbau und der Baumgärtnerei
Cutting device for use in agriculture, viticulture and arboriculture

(30) Priorité: 14.11.1983 FR 8318167
(43) Date de publication de la demande: 19.04.1989
(62) Demande divisionnaire de: 84430038.4
(73) Titulaire: ETABLISSEMENTS PELLENC ET MOTTE (Société Anonyme), 84120 Pertuis (FR)
(72) Inventeur: Pellenc, Roger, F-84120 Pertuis (FR); Roman, Georges, F-84120 Pertuis (FR)
(74) Mandataire: Nuss, Laurent

(56) Documents cités:
- FR-A- 1 290 944
- FR-A- 1 514 889
- FR-A- 2 233 926
- FR-A- 2 382 183
- FR-A- 2 494 081
- SU-A- 854 320
- SU-A- 908 281
- SU-A- 990 133
- "L'agriculteur provençal" du 03.11.1983
- "EVOLUTION", No. 106, octobre - novembre - décembre 1983
- "Le Paysan", No. 788, novembre 1983

## Description

La présente invention conceme une machine de coupe selon le préambule de la revendication 1.

Selon un exemple d'application très avantageux, quoique nullement limitatif, l'invention permet de réaliser une machine polyvalente pour le prétaillage ou la taille automatique ou semi-automatique de la vigne et des arbres ou arbustes fruitiers. De manière plus particulièrement intéressante, dans cette application, l'invention autorise l'exécution d'une machine de prétaillage mécanique ou de taille semi-automatique des vignes, arbustes ou arbres palissés comportant des rameaux ou branches s'accrochant sur des fils soutenus par des piquets espacés ; le nombre de ces fils, leur distension, leur disposition, leur diamètre, leur espacement, etc., pouvant varier d'un vignoble à un autre, voire d'un rang de vigne à un autre.

On connait différentes machines de coupe comportant un ou deux ensembles ou tambours constitués d'une pluralité d'outils superposés comprenant, chacun, au moins un organe rotatif participant à l'action de coupe.

Le document FR-A-2.283.629 décrit une prétailleuse de vigne comprenant deux ensembles de coupe constitués d'une pluralité de couteaux rotatifs superposés portés par des arbres inclinés à écartement invariable.

Le document FR-A-2.233.926 décrit une prétailleuse de vigne comprenant aussi deux ensembles de coupe constitués d'une pluralité d'organes coupants rotatifs (couteaux et scie) et superposés, portés par deux arbres verticaux à écartement invariable, logés dans un carter.

Le document FR-A-1.290.944 décrit une tronçonneuse de sarments comportant un unique ensemble de coupe constitué d'une pluralité de scies rotatives superposées et coopérant avec deux ensembles d'entraînement formés d'une pluralité de crochets superposés et rotatifs, disposés de part et d'autre dudit ensemble de coupe, avec un écartement invariable.

Si de telles machines peuvent effectuer, à la fois, un prétaillage et un broyage des sarments coupés, sur des vignes cultivées "en gobelet", c'est-à-dire sans soutien des plantes par des fils métalliques de palissage, il est radicalement exclu qu'elles puissent effectuer un prétaillage de la vigne ou autres arbustes ou arbrisseaux soutenus par de tels fils.

Pour le prétaillage de la vigne palissée, on connaît (FR-A-1.514.889) une machine de coupe comportant deux outils de coupe indépendants montés, chacun, a l'extrémité d'un bras pivotant rappelé élastiquement et permettant l'effacement dudit outil de coupe au contact des piquets du palissage et son retour en position initiale après contournement de ces derniers.

On connait également (FR-A-2.484.081) une prétailleuse automatique destinée au prétaillage de plantations en ligne fixées sur des fils de palissage soutenus par des piquets et comprenant un ensemble de coupe monté à l'extrérnité d'un bras pivotant rappelé par ressort, ledit ensemble de coupe comportant des lames et des contre-lames rotatives au-dessus desquelles est disposé un peigne toumant sous l'action d'un moteur et dont les dents radiales sont recourbées vers le bas, de manière à entourer, périphériquement, le système de coupe proprement dit, de façon à rouler sur les piquets du palissage, sans les couper, lors. de la rencontre de ces derniers.

Les prétailleuses décrites dans les deux documents précités ont notamment pour inconvénient qu'elles ne permettent pas de réduire, de manière très sensible, le temps nécessaire pour l'exécution des différentes interventions très onéreuses liées à la taille des plantations palissées et, notamment, à la taille des vignes palissées.

En effet, le prétaillage effectué à l'aide de ces machines, consiste à couper, uniquement à leur base, les sarments ou les rameaux à supprimer, de sorte que l'on doit ensuite tirer manuellement les sarments ou les rameaux sectionnés pour les détacher des fils du palissage auxquels ils sont accrochés. Ce tirage manuel des bois coupés est une opération longue, pénible et, par conséquent, très coûteuse, en raison du fait que les sarments coupés demeurent fortement agrippés au palissage par leurs vrilles, de sorte que, dans ce cas, l'enlèvement des bois de taille peut représenter entre 35 % et 65 % du temps total des opérations de taille. On conçoit également que le tirage manuel des bois de taille ne permet pas une récupération mécanique directe de ces bois, lors de la coupe, ce qui rend nécessaire un troisième passage dans les plantations, après le prétaillage et le tirage des sarments ou des bois coupés, afin d'effectuer un broyage au sol de ces derniers à l'aide d'un broyeur.

Afin de remédier à cet inconvénient, on a proposé (DE-A-2.815.466) une machine de prétaillage comportant un ensemble de coupe constitué, d'une part, d'une pluralité de couteaux rotatifs superposés et, d'autre part, d'une pluralité de guides étagés disposés entre les couteaux et destinés à glisser sur les fils du palissage. Toutefois, une telle machine a pour inconvénient de travailler sur un seul côté du rang de vigne, et de nécessiter, par conséquent, deux passages en sens inverse pour effectuer le prétaillage de chaque rang. En outre, lors de son premier passage, la machine coupe la végétation seulement du côté où elle se trouve, et, lors de cette action une certaine partie de la végétation se trouve repoussée sur le côté opposé. Lorsque la machine effectue un passage sur le côté opposé du rang, il se produit un phénomène identique, d'où il résulte qu'une partie de la végétation n'est pas coupée. D'autre part, il s'agit d'une conception toute théorique en raison du fait que les fils métalliques des palissages ont, dans le plan vertical, des écartements qui varient d'une vigne à l'autre et même d'un rang à l'autre dans une même vigne, et qu'il serait donc nécessaire de régler la position des guides pour chaque rangée de plantes, ce qui n'est pas acceptable d'un point de vue pratique.

Le document FR-A-1.591.146 décrit une machine de prétaillage de la vigne cultivée "en gobelet", c'est-à-dire sans soutien des plants ou ceps par des fils métalliques de palissage. Cette machine comporte au moins une tête de coupe comprenant deux moulinets ou ensembles de coupe constitués, chacun, d'une pluralité de barres de coupe rotatives d'inégales longueurs superposées et portées par un axe commun, ces ensembles de coupe étant suspendus, par leur extrémité supérieure uniquement, à un bâti porteur, et montés avec une aptitude de mouvement permettant leur rapprochement ou leur éloignement l'un de l'autre ; les barres de coupe de chacun desdits ensembles de coupe ayant une position décalée, dans le plan vertical, par rapport aux barres de coupe de l'autre ensemble. La tête de coupe et les deux ensembles de coupe de cette machine sont conformés et agencés de manière qu'à l'approche d'une souche ou pied de vigne lesdits ensembles de coupe sont automatiquement maintenus écartés l'un de l'autre par l'action d'un organe fixe inférieur prenant appui et glissant sur ladite souche. De la sorte, une partie des jeunes pousses latérales du cep de vigne est coupée, tandis que la barre de coupe supérieure de chaque ensemble qui a une longueur plus importante que celle des barres de coupe sous-jacentes, coupe une partie des pousses supérieures dudit cep.

Une telle machine dont le travail de prétaillage dans les vignes cultivées "en gobelet" est très imparfait (un pourcentage important de rameaux ou sarments n'est pas coupé), ne permet pas le prétaillage de la vigne cultivée sur palissage, c'est-à-dire avec soutien des plantes par des fils métalliques tendus horizontalement.

Cette totale inaptitude de la machine décrite dans le document FR-A-1.591.146 au prétaillage des arbustes palissés résulte notamment :
- de la conformation de ses moulinets ou ensembles de coupe qui ne permettent pas une interpénétration des bords de chacun des outils superposés de chacun desdits moulinets, dans les espaces ménagés entre les bords des outils superposés de l'autre moulinet, dans la position rapprochée desdits moulinets ;
- du fait que les moulinets sont seulement suspendus par leur extrémité supérieure, de sorte que les efforts qu'ils supporteraient lors de leur progression dans les bois accrochés aux fils du palissage, provoqueraient des torsions qui modifieraient l'orientation des lames qui, en toumant dans des plans obliques, pourraient donc entraîner le sectionnement des fils métalliques de palissage ; en outre cette modification de l'orientation des lames des deux moulinets jumelés pourrait provoquer une collision entre les barres de coupe des deux moulinets tournant à grande vitesse et "l'explosion" desdits moulinets, ce qui serait extrêmement dangereux ;
- du fait que ses deux moulinets jumelés tournent dans le même sens, de sorte que l'un d'eux aurait ainsi tendance à éloigner les branches de palissage sur lequel elles sont accrochées ; dans ces conditions, lesdites branches se trouveraient arrachées des souches qui les portent, au lieu d'être coupées.

On connaît enfin une machine de coupe utilisable en agriculture, viticulture et arboriculture, comportant une tête de coupe comprenant deux ensembles de coupe (1) constitués, chacun, d'une pluralité d'outils (20) participant à l'action de coupe, superposés et portés par un axe commun (19), les outils (20) de chacun desdits ensembles de coupe ayant une position décalée, dans le plan vertical, par rapport aux outils de l'autre ensemble, lesdits ensembles de coupe se présentant sous forme de tambours de sorte que lorsque ces derniers sont en position de travail, il y a interpénétration des bords de chacun des outils superposés (20) de chacun desdits tambours, dans les espaces ménagés entre les bords des outils superposés de l'autre tambour, chaque tambour de coupe (1) étant porté par un berceau de soutien auquel il est rattaché par ses extrémités supérieure et inférieure, respectivement, lesdits ensembles de coupe étant montés, avec une aptitude de mouvement permettant leur rapprochement ou leur éloignement l'un de l'autre, de sorte qu'ils peuvent occuper une position rapprochée de travail ou une position écartée d'effacement, ledit berceau de soutien (13) étant mobile et monté avec une aptitude de pivotement autour d'un axe vertical (13f).

La machine selon l'invention a notamment pour but de remédier aux inconvénients précités, ainsi qu'aux insuffisances des machines décrites dand les différents documents susmentionnées.

Selon l'invention, cet objectif est atteint grâce à une machine caractérisée en ce qu'elle comporte en outre d'une part, des moyens (10, 11, 12) permettant l'écartement volontaire des tambours de coupe (1) pour permettre le positionnement de la tête de coupe (1-1) sur l'extrérnité initiale d'un rang de vignes ou autres végétaux palissés à prétailler et/ou à tailler et, d'autre part, des moyens (13, 13f, 15a, 15b, 16) permettant l'effacement automatique des tambours de coupe (1) lors de la rencontre des piquets de palissage ainsi que le rappel automatique desdits tambours de coupe, en direction de l'axe de travail de ladite machine, après contournement desdits piquets, lesdits tambours de coupe étant par ailleurs entraînés en rotation en sens contraire et en avalant, lesdits outils de coupe superposés (20) comprenant, chacun, une cage circulaire (23) apte à tourner autour d'un axe de rotation et munie d'ouvertures périphériques (23a), et un organe intérieur en forme de lame(s) (24) participant à l'action de coupe et logé dans ladite cage (23), cette dernière étant accouplée à des moyens moteurs (19) destinés à assurer son entraînement en rotation en cours de travail, la cage circulaire rotative (23) et l'organe intérieur (24) participant à l'action de coupe étant agencés de manière complémentaire et associés pour constituer un système de lame et de contre-lame produisant une coupe par cisaillement.

La machine ainsi réalisée permet d'effectuer, en un seul passage, la coupe de la totalité des sarments ou rameaux des plantes accrochés aux fils des palissages ou soutenus par ces derniers. Elle permet aussi d'éliminer totalement l'opération longue, pénible et extrêmement onéreuse que représente le tirage des bois de taille, ce qui réduit considérablement le temps actuellement nécessaire pour l'exécution des différentes interventions liées à la taille, cette réduction étant, par exemple, largement supérieure à 50 % en ce qui concerne la taille de la vigne. En effet, la machine selon l'invention effectue un sectionnement des bois de taille en petits morceaux de quelques centimètres dont une quantité négligeable seulement reste prise dans le palissage.

D'autre part, cette machine permet également de supprimer l'opération de broyage au sol des bois de taille, les petits morceaux de bois sectionnés par ses ensembles de coupe pouvant, en effet, être aisément récupérés en même temps que l'on procède à l'opération de prétaillage et/ou de taille, au moyen d'un dispositif de récupération comprenant, par exemple, deux tapis transporteurs placés de part et d'autre du rang de vigne ou autre culture alignée, sous les ensembles de coupe, et se déversant dans une benne attelée à l'arrière du tracteur portant la machine, ce qui offre, en outre, l'avantage que les morceaux de bois récupérés ne sont pas souillés par la terre ou mélangés à des pierres.

On conçoit donc que la coupe et le broyage peuvent être effectués automatiquement en un seul passage sur les rangs.

De plus, compte tenu du fait que les bois coupés ne sont pas tirés, le palissage ne supporte aucun effort notable concourant à l'endommager.

Les buts, caractéristiques et avantages susmentionnés, et d'autres encore, ressortiront mieux de la description qui suit et des dessins annexés dans lesquels :
La figure 1 est une vue de côté d'un exemple d'exécution de la machine selon l'invention représentée montée sur un tracteur agricole.
La figure 2 est une vue en plan de la figure 1.

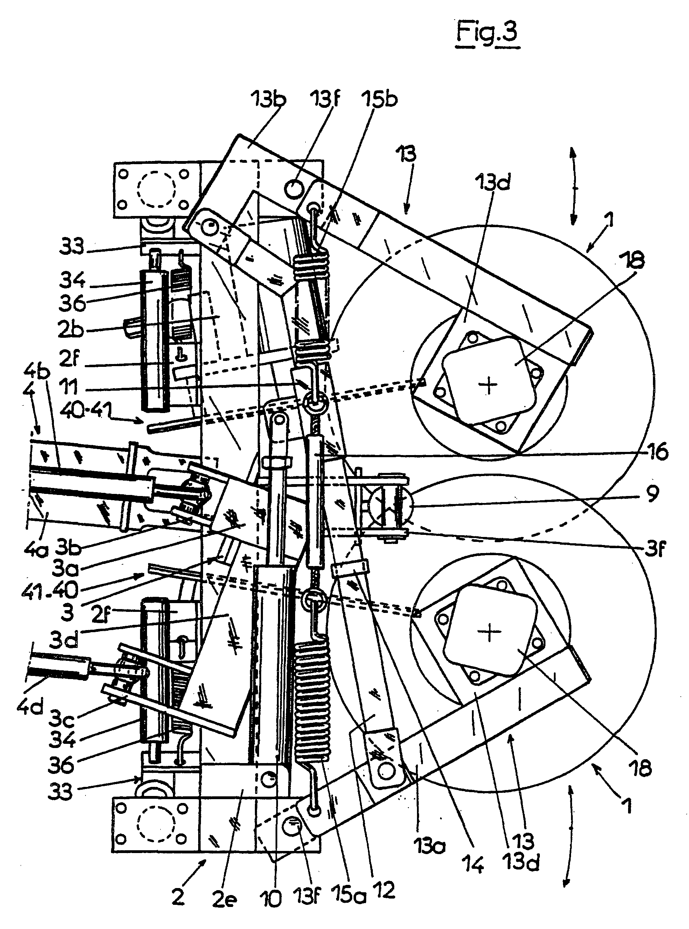

La figure 3 est une vue en plan de la partie avant de la machine.

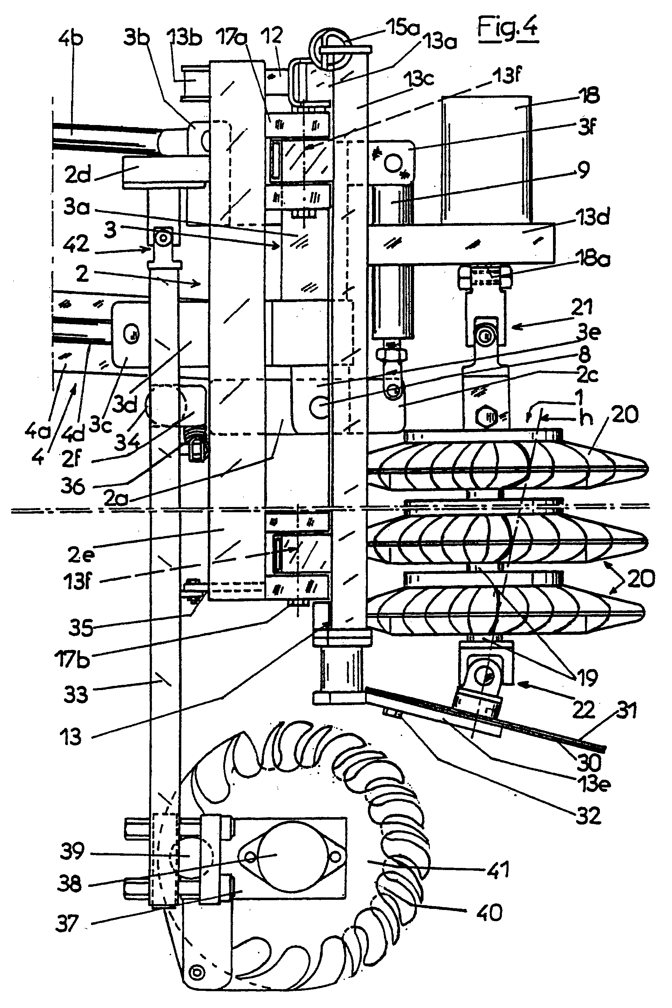

La figure 4 est une vue de côté de la figure 3.
La figure 5 est une vue partielle en coupe axiale illustrant l'interpénétration des bords des outils de coupe des deux tambours de coupe représentés en position rapprochée de travail.
La figure 6 est une vue en plan de l'outil de coupe inférieur dont sont équipés les tambours de coupe.
La figure 7 est une vue en coupe selon la ligne 7-7 de la figure 6.

On se réfère auxdits dessins pour décrire un exemple de réalisation intéressant, bien que nullement limitatif, de la machine de coupe selon l'invention qui, suivant cet exemple, est une machine portée apte à être accouplée au dispositif d'attelage à trois points d'un tracteur agricole classique T, et convenant plus particulièrement au prétaillage et à la taille de la vigne ou d'arbres ou arbustes palissés.

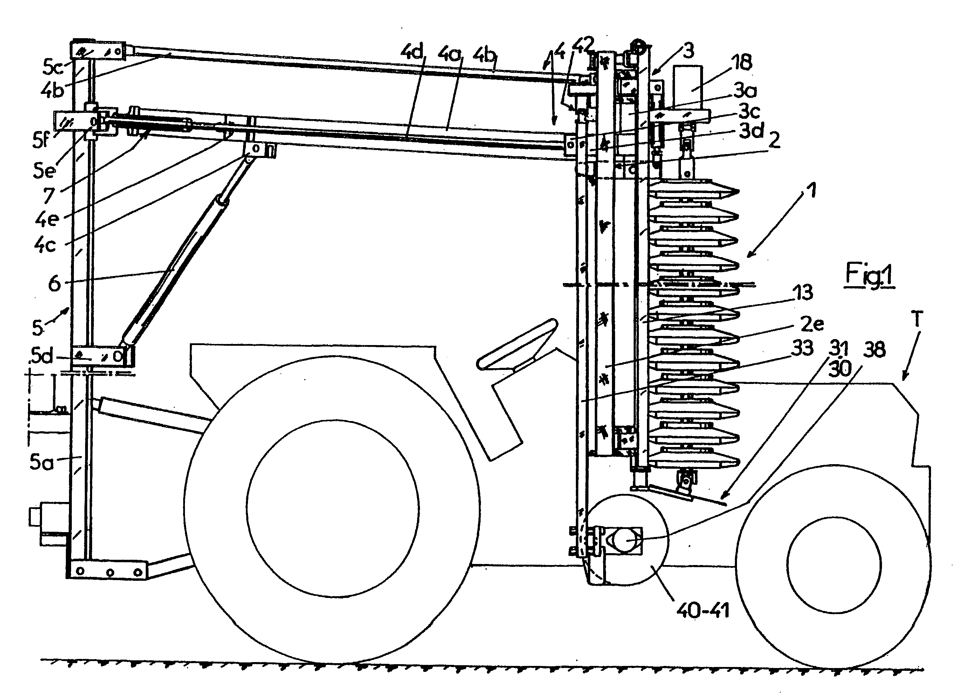

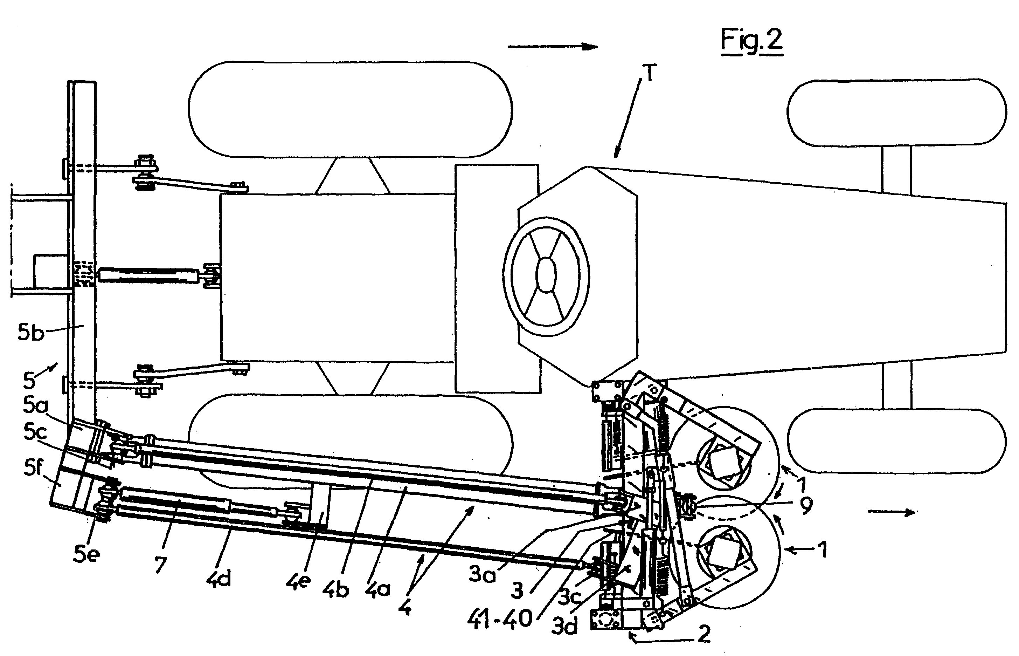

Selon une construction intéressante, la machine de coupe selon l'invention comporte deux ensembles de coupe globalement désignés par la référence 1 aux figures 1 et 2, chaque ensemble de coupe étant essentiellement composés d'une pluralité d'outils de coupe superposés décrits et revendiqués dans le Brevet Européen N, 0 147.344. Suivant l'exemple illustré, ces ensembles de coupe sont constitués par des tambours rotatifs portés par un bâti porteur 2 suspendu à un support 3 monté à l'une des extrémités d'un bras 4 soutenu par un robuste châssis d'attelage 5.

Le châssis 5 est agencé de manière à pouvoir être monté, au moyen d'un dispositif d'attelage universel à trois points, sur un tracteur agricole. Ce châssis est, par exemple, principalement constitué de deux solides montants tubulaires 5a rigidement entretoisés au moyen de traverses 5b.

Il porte le bras 4 monté avec une aptitude de pivotement dans le plan vertical et dans un plan perpendiculaire au plan vertical et, par exemple, fixé à la partie supérieure de l'un des montants 5a dudit châssis. Le bras 4 est avantageusement formé par un système de double parallélogramme déformable.

Il comprend un premier parallélogramme déformable disposé dans le plan vertical et constitué : - d'une part, d'une robuste poutre tubulaire principale 4a fixée, par ses extrémités opposées et au moyen d'articulations à joint de cardan, au montant 5a du châssis 5 et à un élément vertical 3a du support 3, respectivement, et, - d'autre part, d'une tringle 4b articulée, par ses extrémités opposées et au moyen d'articulations sphériques, dans une chape 5c portée par la partie supérieure dudit montant et dans une chape 3b dont est équipé ledit élément vertical 3a dudit support.

Les mouvements de pivotement du bras porteur 4 dans le plan vertical sont assurés au moyen d'un vérin 6 fixé, par ses extrémités opposées et au moyen d'articulations sphériques, d'une part, dans une chape 5d solidaire de la portion intermédiaire du montant 5a et, d'autre part, dans une chape 4c équipant la portion intermédiaire de la poutre principale 4a.

Le second parallélogramme déformable est disposé dans un plan perpendiculaire au plan vertical et il est constitué de ladite poutre principale 4a et d'une seconde tringle 4d articulée, par ses extrémités opposées et au moyen d'articulations sphériques, d'une part, dans une chape 5e solidaire d'une petite potence horizontale 5f fixée au voisinage de l'extrémité supérieure du montant 5a et, d'autre part, dans une seconde chape 3c dont est pourvu un élément horizontal 3d du support 3.

Les mouvements de pivotement du bras porteur 4 dans des plans perpendiculaires au plan vertical sont obtenus au moyen d'un vérin 7 fixé, par ses extrémités opposées et au moyen d'articulations sphériques, d'une part, dans la chape 5e et, d'autre part, dans une chape 4e équipant la portion intermédiaire de la poutre principale 4a.

Le vérin 6 et le parallélogramme déformable 4a-4b-5a-3a permettent un réglage de la position en hauteur des tambours de coupe 1 de la tête de coupe de la machine, tout en maintenant leurs axes dans une position verticale, tandis que le vérin 7 et le parallélogramme déformable 4a-4d-5f-3d permettent un réglage de la position desdits tambours de coupe par rapport à l'axe d'avancement de la machine, tout en maintenant les axes desdits tambours de coupe dans un plan perpendiculaire audit axe d'avancement.

On conçoit que le système de double parallélogramme déformable constituant le bras porteur 4 a pour fonction de maintenir le bon positionnement des ensembles ou tambours de coupe par rapport aux plans de travail de la machine.

Le bâti 2 portant les tambours de coupe 1 est suspendu au support 3 avec une latitude de pivotement de faible amplitude dans un plan vertical parallèle à l'axe d'avancement de la machine. Ledit bâti porteur 2 comporte, par exemple, un petit bras de suspension 2a solidaire d'une traverse 2b dudit bâti et fixé, au moyen d'un axe 8, dans une chape inférieure 3e du support 3: Un vérin 9 reliant le support 3 et le bati porteur 2, permet de ramener les axes des tambours de coupe dans la position verticale, ce vérin étant, par exemple, fixé par ses extrémités opposées et au moyen d'articulations, d'une part, dans une chape 2c que présente le bras de suspension 2a à distance de son axe de suspension 8 et, d'autre part,dans une chape supérieure 3f du support 3.

Le vérin 9 constitue une sécurité permettant de replacer les empilages d'outils de coupe des tambours de coupe 1 dans une position fonctionnelle verticale, dans le cas où ils s'inclineraient pour une cause fortuite, par exemple lors de la rencontre d'obstacles.

Des moyens permettent l'écartement volontaire des tambours de coupe 1, par exemple pour permettre le positionnement de la tête de coupe de la machine sur l'extrémité initiale d'un rang de vigne ou autres végétaux palissés à prétailler et/ou à tailler, et l'effacement automatique desdits tambours de coupe, lors de la rencontre d'un piquet du palissage.

Les moyens permettant l'écartement volontaire des ensembles de coupe 1 comprennent un vérin 10 fixé, par ses extrémités opposées et au moyen d'articulations, d'une part, à la partie supérieure de l'un des montants 2e du bati porteur 2 et, d'autre part, sur un coulisseau 11 monté sur une coulisse 12 comportant une extrémité déportée. Cette coulisse est elle-même articuiée, par ses extrémités opposées et de façon dissymétrique, sur des bras 13a, 13b rigidement solidaires de la partie supérieure des montants 13c des berceaux de soutien pivotants 13 dans lesquels sont montés les tambours de coupe. Une butée 14 portée par la coulisse 12 limite l'ampiltude de la course du coulisseau 11.

Le rappel automatique des tambours de coupe 1 vers le centre ou axe de travail de la machine est assuré par des ressorts de traction 15a-15b fixés, chacun, par l'une de ses extrémités, à l'un des bras 13a, 13b, respectivement, en avant des axes verticaux d'articulation 13f des berceaux de soutien 13, ces ressorts étant en outre reliés au moyen d'un tendeur à vis 16 permettant de régler leur force de rappel.

Ces ressorts autorisent aussi l'effacement automatique des tambours de coupe 1 lors de la rencontre des piquets du palissage, et leur rappel automatique en position fonctionnelle rapprochée d'interpénétration après contoumement desdits piquets.

Les conformations de la coulisse 12 et des bras 13a, 13b assurent la simultanéité et le synchronisme de l'effacement et du rappel automatiques des tambours de coupe.

Les montants 13c des berceaux de soutien 13 des tambours de coupe 1 sont montés avec une aptitude de pivotement autour d'axes verticaux ou sensiblement verticaux 13f, sur les montants 2e du bâti-porteur 2, par exemple au moyen de charnières 17a, 17b. Les berceaux de soutien 13 comprennent encore une console supérieure 13d et une console inférieure 13e.

Sur la console supérieure, est installé le moteur hydraulique 18 assurant l'entraînement en rotation du tambour de coupe sous-jacent.

Chaque tambour de coupe est principalement et avantageusement constitué d'un arbre commun 19 et d'une pluralité d'outils de coupe superposés 20 empilés autour dudit arbre. Ce dernier est accouplé, au moyen d'articulations mobiles ou accouplements non rigides 21, 22, et de manière démontable, d'une part à l'arbre moteur 18a et, d'autre part, à la contre-lame rotative d'un outil porté par la console inférieure 13e et décrit ci-aprés.

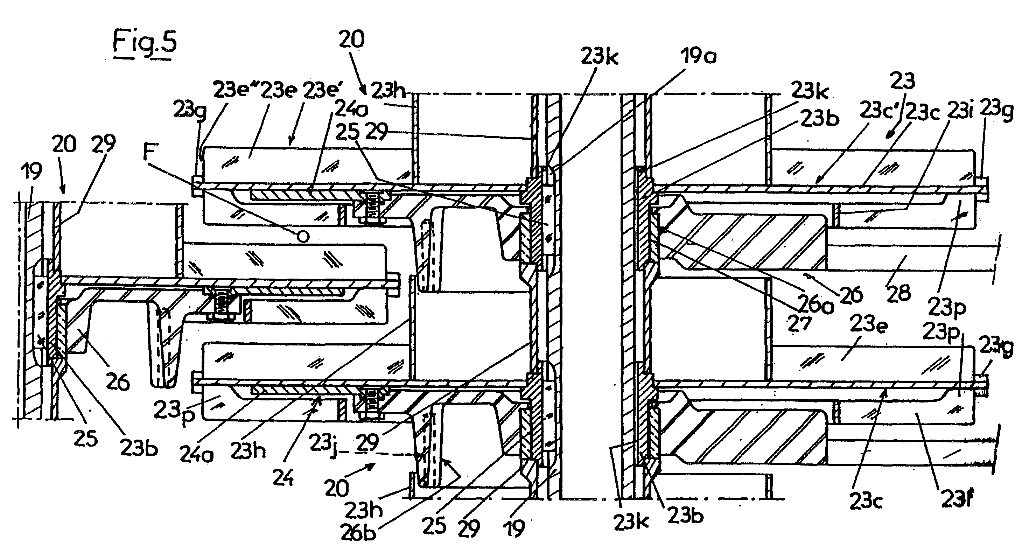

Les outils de coupe 20 sont du genre de ceux qui sont décrits dans le Brevet Européen N, 0.147.344. Ces outils de coupe sont remarquables par le fait qu'ils comprennent une cage circulaire 23 apte à tourner autour d'un axe de rotation et munie d'ouvertures périphériques 23a, et un organe intérieur en forme de lame(s) 24 participant à l'action de coupe et logé dans ladite cage 23, cette dernière étant accouplée à des moyens moteurs 19 destinés à assurer son entraînement en rotation en cours de travail (figure 5).

Les outils 20 de chaque ensemble de coupe 1 ont une position décalée, dans le plan vertical, par rapport aux outils de coupe de l'autre ensemble. De la sorte, lorsque lesdits ensembles ou tambours de coupe sont rapprochés, on obtient une interpénétration des bords des outils de coupe de chaque ensemble dans les espaces annulaires entre-outils de l'autre tambour de coupe (figure 5).

Le nombre des outils de coupe 20 empilés, c'est-à-dire la hauteur des tambours de coupe 1, peut être aisément adapté à la hauteur des bois à éliminer ; il suffit, en effet, pour opérer un tel réglage, de désaccoupler l'extrémité supérieure de l'arbre 19 et d'ajouter ou d'enlever un ou plusieurs desdits outils de coupe.

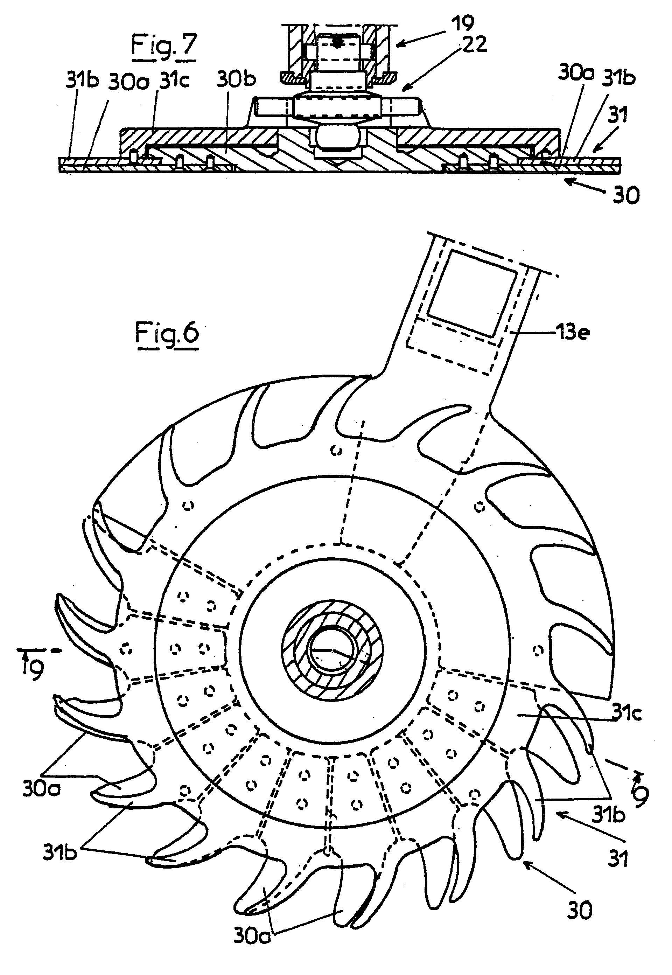

La console inférieure 13e des berceaux de soutien 13 est inclinée vers l'avant et, sur cette console, est monté, avec une inclinaison correspondante, un organe de coupe inférieur constitué d'un couteau fixe 30 et d'une contre-lame rotative 31 disposée coaxialement au-dessus dudit couteau (figures 6 et 7). Ce dernier a une forme circulaire et il comporte une pluralité de lames coupantes 30a régulièrement réparties sur un arc de cercle correspondant sensiblement à sa demi-périphérie avant. Les lames coupantes 30a sont, de préférence, montées unitairement, de manière amovible, sur un porte-lames 30b et fixées, par exemple, par vissage, contre la face inférieure de celui-ci. Le couteau fixe ainsi réalisé est immobilisé en rotation par fixation sur la console 13e, par exemple au moyen d'une vis ou boulon 32. La contre-lame rotative a également une forme circulaire et elle est dotée d'échancrures périphériques 31a séparées par des dents 31 b formant autant de contre-lames. Les dents 31b de la contre-lame sont également, de préférence, montées de manière amovible, sur un porte-dents 31c et fixées, par exemple par vissage, contre la face inférieure de celui-ci. La contre-lame tournante ainsi réalisée est entraînée en rotation au moyen de l'arbre 19 à l'extrémité inférieure duquel elle est accouplée au moyen de l'articulation mobile 22.

La machine selon l'invention comporte encore des organes de coupe latéraux. Chacun de ces organes est installé à l'extrémité inférieure d'un bras 33 suspendu, au moyen d'une articulation mobile ou accouplement non rigide 42, à une potence 2d rigidement solidaire de la partie supérieure des montants 2e du bâti-porteur 2.

Dès vérins 34 fixés à un élément fixe 2f du bati 2 et appuyés, par l'extrémité externe de leur tige, contre les bras suspendus 33, permettent de pivoter ces demiers en direction de l'extérieur par rapport à l'axe d'avancement de la machine et, par conséquent, d'écarter les organes de coupe latéraux portés par l'extrémité inférieure desdits bras. Ces vérins sont montés en parallèle avec le vérin 10 permettant l'écartement volontaire des tambours de coupe 1.

Dans sa partie inférieure, chaque bras 33 est relié au montant 2e adjacent, au moyen d'une biellette 35 articulée, par ses extrémités opposées, sur ledit bras et sur ledit montant, respectivement Les biellettes 35 ont pour fonction d'imposer un mouvement circulaire aux bras 33 lorsque ces derniers sont écartés sous l'action des vérins 34, ou lorsqu'ils s'effacent automatiquement lors de la rencontre d'obstacles, ce qui a pour résultat intéressant de favoriser le dégagement des organes de coupe latéraux des enchevêtrements de bois dans lesquels ils peuvent se trouver.

Des ressorts de traction 36 fixés, par leurs extrémités opposées, d'une part, sur les bras suspendus 33 et, d'autre part, sur un élément fixe 2f du bâti 2, assurent le rappel automatique desdits bras et, par conséquent, des organes de coupe latéraux, en direction du centre de la machine.

Les organes de coupe latéraux sont portés par des platines 37 fixées à l'extrémité inférieure des bras 33 et sur le côté extérieur desquelles est installé le moteur hydraulique 38 destiné à l'entraînement en rotation de l'élément tournant desdits organes de coupe.

Les platines 37 sont montées sur les bras 33, au moyen d'une rotule 39 permettant le réglage de l'orientation des organes de coupe latéraux portés par lesdites platines.

Ces derniers sont constitués, de manière analogue aux organes de coupe inférieurs avant 30-31, d'un couteau fixe 40 et d'une contre-lame rotative circulaire 41 disposée contre la face interne dudit couteau. Celui-ci comporte une pluralité de lames coupantes amovibles régulièrement réparties seulement sur un arc de cercle correspondant sensiblement à sa demi-périphérie avant, tandis que la contre-lame rotative calée sur l'arbre de sortie du moteur 38, est pourvue d'échancrure régulièrement distribuées sur toute sa périphérie et séparées par des dents amovibles constituant une pluralité de contre-lames.

On souligne que l'absence de lames dans la partie arrière des couteaux fixes 30 et 40 des organes de coupe inférieurs et latéraux a pour avantage d'écarter tout risque de coupure des fils du palissage.

On souligne aussi que ces organes de coupe, en raison de leur agencement, permettent d'effectuer une coupe très nette des bois, comparable à celle que l'on obtient à l'aide des sécateurs, de sorte qu'elle peut être acceptée comme une opération de taille ne nécessitant aucune reprise manuelle ultérieure.

D'autre part, on observe que l'élément fixe 30, 40 des organes de coupe inférieurs et des organes de coupe latéraux sont disposés du côté du bois (porteur) qui reste rattaché au plant ou arbuste après la coupe, tandis que l'élément rotatif 31, 41 desdits organes est placé du côté du bois coupé. Grace à cette disposition, les bois qui restent ne peuvent être cassés par lesdits organes de coupe.

## Revendications

1. Machine de coupe utilisable en agriculture, viticulture et arboriculture, comportant une tête de coupe comprenant deux ensembles de coupe (1) constitués, chacun, d'une pluralité d'outils (20) participant à l'action de coupe, superposés et portés par un axe commun (19), les outils (20) de chacun desdits ensembles de coupe ayant une position décalée, dans le plan vertical, par rapport aux outils de l'autre ensemble, lesdits ensembles de coupe se présentant sous forme de tambours de sorte que lorsque ces derniers sont en position de travail, il y a interpénétration des bords de chacun des outils superposés (20) de chacun desdits tambours, dans les espaces ménagés entre les bords des outils superposés de l'autre tambour, chaque tambour de coupe (1) étant porté par un berceau de soutien auquel il est rattaché par ses extrémités supérieure et inférieure, respectivement, lesdits ensembles de coupe étant montés, avec une aptitude de mouvement permettant leur rapprochement ou leur éloignement l'un de l'autre, de sorte qu'ils peuvent occuper une position rapprochée de travail ou une position écartée d'effacement, ledit berceau de soutien (13) étant mobile et monté avec une aptitude de pivotement autour d'un axe vertical (13f), **caractérisé en ce que** ladite machine comporte en outre, d'une part, des moyens (10, 11, 12) permettant l'écartement volontaire des tambours de coupe (1) pour permettre le positionnement de la tête de coupe (1-1) sur l'extrémité initiale d'un rang de vignes ou autres végétaux palissés à prétailler et/ou à tailler et, d'autre part, des moyens (13, 13f, 15a, 15b, 16) permettant l'effacement automatique des tambours de coupe (1) lors de la rencontre des piquets de palissage ainsi que le rappel automatique desdits tambours de coupe, en direction de l'axe de travail de ladite machine, après contoumement desdits piquets, lesdits tambours de coupe étant par ailleurs entraîhés en rotation en sens contraire et en avalant, lesdits outils de coupe superposés (20) comprenant, chacun, une cage circulaire (23) apte à tourner autour d'un axe de rotation et munie d'ouvertures périphériques (23a), et un organe intérieur en forme de lame(s) (24) participant à l'action de coupe et logé dans ladite cage (23), cette dernière étant accouplée à des moyens moteurs (19) destinés à assurer son entraînement en rotation en cours de travail, la cage circulaire rotative (23) et l'organe intérieur (24) participant à l'action de coupe étant agencés de manière complémentaire et associés pour constituer un système de lame et de contre-lame produisant une coupe par cisaillement.

2. Machine de coupe suivant la revendication 1, **caractérisée en ce que** lesdits moyens (10, 11, 12) permettant l'écartement volontaire des tambours de coupe (1) comprennent un vérin (10) fixé, par ses extrémités opposées et au moyen d'articulations, d'une part, à la partie supérieure de l'un des montants (2e) du bâti (2) portant les tambours de coupe (1), et, d'autre part, sur un coulisseau (11) monté sur une coulisse (12) comportant une extrémité déportée ; cette coulisse étant elle-même articulée, par ses extrémités opposées et de façon dissymétrique, sur des bras (13a, 13b) rigidement solidaires de la partie supérieure des montants (13c) des berceaux de soutien pivotants (13) dans lesquels sont montés les tambours de coupe.

3. Machine de coupe suivant l'une quelconque des revendications 1 à 2, **caractérisée en ce que** sa tête de coupe (1-1) est montée à l'extrémité d'un bras porteur mobile (4) constitué par un système de double parallélogramme défavorable (4a-4b-5a-3b; 4a-4d-5f-3d) assurant le déplacement dudit bras porteur dans le plan vertical et dans des plans perpendiculaires au plan vertical.

4. Machine de coupe suivant l'une quelconque des revendications 1 à 3, **caractérisée en ce que** sa tête de coupe (1-1) est suspendue, avec une latitude de pivotement d'amplitude limitée, dans un plan parallèle à l'axe d'avancement de ladite machine.

5. Machine de coupe suivant la revendication 1, **caractérisée en ce que** des moyens d'écartement (29) sont disposés entre les outils (20) empilés.

6. Machine de coupe selon la revendication 1, **caractérisée en ce que** chaque ensemble ou tambour de coupe (1) comporte un outil de coupe inférieur (30-31) disposé au-dessous du tambour de coupe proprement dit constitué par les outils empilés, l'arbre (19) dudit tambour de coupe étant accouplé, au moyen d'une articulation mobile ou accouplement non rigide (21, 22), d'une part, à l'arbre moteur (18a) et, d'autre part, à l'organe rotatif (31) dudit outil de coupe inférieur.

7. Machine de coupe selon la revendication 1, **caractérisée en ce qu'**elle comprend des outils de coupe latéraux (40-41).

8. Machine de coupe suivant la revendication 7, **caractérisée en ce que** chaque outil de coupe latéral (40-41) est installé à l'extrémité inférieure de son bras porteur (33), au moyen d'une rotule (39) permettant un réglage de son orientation.

9. Machine de coupe selon l'une quelconque des revendications 6, 7 ou 8, **caractérisée en ce que** les outils de coupe inférieurs (30-31) et/ou les outils de coupe latéraux (40-41) comprennent : d'une part, un élément circulaire rotatif (31, 41) pourvu d'échancrures (31a) et de dents (31b) périphériques et constitué, de préférence, par une contre-lame, et, d'autre part, un élément fixe (30, 40) comportant une pluralité de dents (30a) réparties sur un arc de cercle correspondant sensiblement à sa demi-périphérie avant, cet élément fixe étant, de préférence, constitué par un couteau dont les dents (30a) constituent autant de lames tranchantes ; ledit élément fixe ne comportant aucune dent ou lame dans sa portion arrière et étant disposé du côté du bois qui demeure rattaché au plant ou arbuste après la coupe, tandis que ledit élément rotatif est placé du côté du bois coupé.

## Patentansprüche

1. Schneidmaschine zur Verwendung in der Landwirtschaft, im Weinbau und in der Baumgärtnerei, die einen Schneidkopf enthält, der zwei Schneidsätze (1) aufweist, die jeweils aus einer Vielzahl von Werkzeugen (20) gebildet werden, die am Schneidvorgang beteiligt sowie übereinander angeordnet sind und von einer gemeinsamen Achse (19) getragen werden, wobei die Werkzeuge (20) jedes dieser Schneidsätze in vertikaler Ebene in bezug auf die Werkzeuge des anderen Satzes eine gegeneinander versetzte Position aufweisen, wobei die Schneidsätze in Form von Trommeln gestaltet sind, so daß dann, wenn diese sich in Arbeitsstellung befinden, die Kanten jedes der übereinander angeordneten Werkzeuge (20) jeder dieser Trommeln in den zwischen den Kanten der übereinander angeordneten Werkzeuge der anderen Trommel ausgesparten Raum eindringen, wobei jede Schneidtrommel (1) von einem Stützträger getragen wird, an dem sie jeweils mit ihrem oberen und unteren Ende befestigt ist, wobei die Schneidsätze beweglich montiert sind und sich einander annähern oder voneinander entfernen können, so daß sie eine aneinander angenäherte Arbeitsposition oder eine voneinander beabstandete Trennungsposition einnehmen, wobei der Stützträger (13) beweglich und um eine vertikale Achse (13f) drehbar montiert ist, **dadurch gekennzeichnet, daß** die Maschine außerdem einerseits Mittel (10, 11, 12) umfaßt, welche die beabsichtigte Beabstandung der Schneidtrommeln (1) gestatten, um die Positionierung des Schneidkopfes (1-1) über dem Anfang einer Rebstockreihe oder einer Reihe anderer an Spalieren befestigten Pflanzen zu ermöglichen, die vorgeschnitten und/oder geschnitten werden sollen, und andererseits Einrichtungen (13, 13f, 15a, 15b, 16), welche das automatische Auseinanderführen der Schneidtrommeln (1) beim Auftreffen auf Spalierpfähle ermöglichen sowie die automatische Rückführung der Schneidtrommeln in Richtung zur Arbeitsposition der Maschine nach dem Umgehen der Spalierpfähle, wobei die Schneidtrommeln übrigens in entgegengesetzter Richtung drehend und im Vorschub angetrieben werden, wobei die übereinander angeordneten Schneidwerkzeuge (20) jeweils ein kreisförmiges Gehäuse (23) enthalten, das sich um eine Drehachse drehen kann und mit Umfangsöffnungen (23a) und einem inneren Organ in Form von Klingen (24) ausgestattet ist, das am Schneidvorgang teilnimmt und in dem Gehäuse (23) gelagert ist, wobei dieses mit Motoreinrichtungen (19) gekoppelt ist, die den Drehantrieb während der Arbeit sicherstellen sollen, wobei das runde, rotierende Gehäuse(23) und das innere Organ (24), die am Schneidvorgang teilnehmen, komplementär ausgespart und so verbunden sind, daß sie ein System von Klingen und Gegenklingen bilden, das einen Schnitt durch Abscheren erzeugt.

2. Schneidmaschine nach Anspruch 1, **dadurch gekennzeichnet, daß** die Einrichtungen (10, 11, 12), welche das beabsichtigte Auseinanderführen der Schneidtrommeln (1) ermöglichen, einen Zylinder (10) umfassen, der an seinen entgegengesetzten Enden über Gelenkverbindungen einerseits am oberen Teil einer der Streben (2e) des Rahmens (2), der die Schneidtrommeln (1) trägt, und andererseits auf einem Schlitten (11) befestigt ist, der auf einer Gleitführung (12) montiert ist, die ein verschobenes Ende aufweist; wobei diese Gleitführung an ihren entgegengesetzten Enden selbst in asymmetrischer Weise mit den Armen (13a, 13b) gelenkig verbunden ist, die mit dem oberen Teil der Streben (13c) der drehbaren Stützträger (13) fest einstückig sind, in denen die Schneidtrommeln montiert sind.

3. Schneidmaschine nach einem der Ansprüche bis 2, **dadurch gekennzeichnet, daß** der Schneidkopf (1-1) am Ende eines beweglichen Tragarms (4) montiert ist, der aus einem verformbaren System aus zwei Parallelogrammen (4a-4b-5a-3b; 4a-4d-5f-3d) gebildet ist, das die Bewegung des Tragarms in vertikaler Ebene und in den zur vertikalen Ebene senkrechten Ebenen sicherstellt.

4. Schneidmaschine nach einem der Ansprüche 1 bis 3, **dadurch gekennzeichnet, daß** der Schneidkopf (1-1) mit einem Schwenkbereich mit begrenzter Amplitude in einer zur Vorschubachse der Maschine parallelen Ebene aufgehängt ist

5. Schneidmaschine nach Anspruch 1, **dadurch gekennzeichnet, daß** die Einrichtungen (29) zum Auseinanderführen zwischen den übereinander angeordneten Werkzeugen (20) angeordnet sind.

6. Schneidmaschine nach Anspruch 1, **dadurch gekennzeichnet, daß** jede Schneidsatz oder Schneidtrommel (1) ein unteres Schneidwerkzeug (30-31) aufweist, das unter der eigentlichen Schneidtrommel angeordnet ist, die aus den übereinander angeordneten Werkzeugen gebildet ist, wobei die Welle (19) der Schneidtrommel mittels einer beweglichen Gelenkverbindung oder einer nicht starren Kupplungsverbindung (21, 22) einerseits an die Antriebswelle (18a) und andererseits an das Drehorgan (31) des inneren Schneidwerkzeugs angekuppelt ist.

7. Schneidmaschine nach Anspruch 1, **dadurch gekennzeichnet, daß** sie seitliche Schneidwerkzeuge (40-41) enthält.

8. Schneidmaschine nach Anspruch 7, **dadurch gekennzeichnet, daß** jedes seitliche Schneidwerkzeug (40-41) am unteren Ende seines Tragarms (33) mit einem Kugelgelenk (39) eingebaut ist, das die Regulierung seiner Ausrichtung ermöglicht.

9. Schneidmaschine nach einem der Ansprüche 6, 7 oder 8, **dadurch gekennzeichnet, daß** die unteren Schneidwerkzeuge (30-31) und/oder die seitlichen Schneidwerkzeuge (40-41) enthalten: einerseits ein kreisförmiges, rotierendes Element (31, 41), das mit bogenförmigen Ausschnitten (31a) und auf dem Umfang liegenden Zähnen (31b) versehen ist und das vorzugsweise von einer Gegenklinge gebildet wird, und andererseits ein festes Element (30, 40), das mehrere Zähne (30a) aufweist, die auf einem Kreisbogen angeordnet sind, der im wesentlichen seinem halben Vorderumfang entspricht, wobei dieses feste Element vorzugsweise von einem Messer gebildet wird, dessen Zähne (30a) ebenso viele Schneidklingen bilden; wobei das feste Element in seinem rückwärtigen Abschnitt keine Zähne oder Klingen aufweist und auf der Seite der Äste angeordnet ist, die nach dem Schnitt an der Pflanze oder am Strauch verbleiben, während das rotierende Element auf der Seite der abgeschnittenen Äste angeordnet ist.

## Claims

1. Cutting machine for use in agriculture, viticulture and arboriculture, having a cutting head comprising two cutting assemblies (1), each constituted by a plurality of tools (20) which contribute to the cutting action and are superposed and carried by a common axle (19), the tools (20) of each of said cutting assemblies having an offset position, in the vertical plane, with respect to the tools of the other assembly, said cutting assemblies being in the form of drums, so that when said drums are in a working position, there is interpenetration of the edges of each of the superposed tools (20) of each of said drums, in the spaces incorporated between the edges of the superposed tools of the other drum, each cutting drum (1) being carried by a supporting cradle to which it is joined by both its upper and its lower end, respectively, said cutting assemblies being mounted with an aptitude for movement which allows them to be moved close together or apart from one another, thereby enabling them to occupy a working position in which they are close together or a cancellation position in which they are apart, the said supporting cradle 13 being mobile and mounted with an aptitude for pivoting around a vertical shaft (13f), **characterised in that** the said machine comprises, on the one hand, the means (10, 11, 12) allowing the cutlery drums to be moved apart at will to permit the positioning of the cutting head (1-1) at the initial end of a row of vines or other staked plants to trim and/or prune and, on the other hand, the means (13, 13f, 15a, 15b, 16) allowing automatic cancellation of the cutting drums (1) upon encountering the stakes of the line of stakes as well as the automatic return of said cutting drums, in the direction of the working axis of said machine, once said stakes have been bypassed, said cutting drums furthermore being driven in rotation in the opposite direction and swallowed, the said superposed cutting tools (20) each comprising a circular cage (23) adapted to rotate about a rotational axis and provided with peripheral openings (23a), and an internal member in the form of one or more blades (24) contributing to the cutting action and housed in said cage (23), the latter being coupled to motor means (19) designed to ensure its rotation as it operates, the rotative circular cage (23) and the internal member (24) contributing to the cutting action being disposed in a complimentary and associated manner to form a blade and counter blade system producing a shearing cutter.

2. Cutting machine according to claim 1, **characterised in that** the said means (10, 11, 12) allowing the cutting drums (1) to be moved apart at will comprise a jack (10) fixed by its opposing ends and by means of joints, on the one hand to the upper part of one of the struts (2e) of the frame (2) carrying the cutting drums (1), and on the other hand on a sliding block (11) mounted on a slide (12) having one end offset; this slide in turn being articulated, by its opposing ends and in asymmetrical fashion, on arms (13a, 13b) rigidly connected to the upper part of the struts (13c) of the pivoting supporting cradles (13) in which the cutting drums are mounted.

3. Cutting machine according to any of claims 1 to 2, **characterised in that** its cutting head (1-1) is mounted on the end of a mobile carrying arm (4) constituted by a deformable double parallelogram system (4a-4b-5a-3b; 4a-4d-5f-3d) which ensures the displacement of said carrying arm in the vertical plane and in planes perpendicular to the vertical plane.

4. Cutting machine according to any of claims 1 - 3, **characterised in that** its cutting head (1-1) is suspended, with a limited swivelling latitude, in a plane parallel to the axis in which said machine is advanced.

5. Cutting machine according to claim 1, **characterised in that** spacing means (29) are disposed between the stacked tools (20).

6. Cutting machine according to claim 1, **characterised in that** each cutting assembly or drum (1) has a lower cutting tool (30-31) disposed beneath the cutting drum proper constituted by the stacked tools, the shaft (19) of said cutting drum being coupled, by means of a movable joint or non-rigid coupling (21, 22), on the one hand to the motor shaft (18a) and on the other hand to the rotary member (31) of said lower cutting tool.

7. Cutting machine according to claim 1, **characterised in that** it comprises lateral cutting tools (40-41).

8. Cutting machine according to claim 7, **characterised in that** each lateral cutting tool (40-41) is installed on the lower end of its carrying arm (33), by means of a ball (39) allowing its orientation to be regulated.

9. Cutting machine according to any of claims 6, 7 or 8, **characterised in that** the lower cutting tools (30-31) and/or the lateral cutting tools (40-41) comprise; on the one hand, a rotary circular element (31, 41) provided with scallops (31a) and peripheral teeth (31b) and preferably constituted by a counter-blade, and, on the other hand, a fixed element (30, 40) having a plurality of teeth (30) distributed over an arc of a circle corresponding substantially to its front half-periphery, said fixed element preferably being constituted by a cutting knife whose teeth (30a) constitute as many sharp-edged blades; said fixed element having no tooth or blade in its rear portion and being disposed on the side of the wood that remains attached to the plant or bush after cutting, whereas said rotary element is positioned on the side of the cut wood.
